# EUROPEAN PATENT SPECIFICATION

(11) **EP 3 715 115 B1**
(45) Date of publication and mention of the grant of the patent: **21.07.2021**
(21) Application number: 18878706.3
(22) Date of filing: 06.09.2018
(51) Int. Cl.: B32B 27/30, B32B 1/08, C09J 123/26, C09J 127/18, C09J 127/20, C09J 127/22, F16L 11/12

(54) **HEAT-RESISTANT BILAMINAR HEAT-SHRINKABLE TUBE AND METHOD FOR COVERING TO-BE-COVERED OBJECT**
HITZEBESTÄNDIGES, BILAMINARES HITZESCHRUMPFBARES ROHR UND VERFAHREN ZUR ABDECKUNG EINES ZU BEDECKENDEN GEGENSTANDES
TUBE THERMORÉTRACTABLE BILAMINAIRE RÉSISTANT À LA CHALEUR ET PROCÉDÉ DE RECOUVREMENT D'OBJET À RECOUVRIR

(30) Priority: 20.11.2017 JP 2017222394
(43) Date of publication of application: 30.09.2020
(73) Proprietor: Sumitomo Electric Fine Polymer, Inc., Sennan-gun, Osaka 590-0458 (JP); Sumitomo Electric Industries, Ltd., Osaka-shi, Osaka 541-0041 (JP)
(72) Inventor: YAMASAKI, Satoshi, Osaka-shi Osaka 541-0041 (JP); TAKANO, Tsubasa, Sennan-gun Osaka 590-0458 (JP); MURATA, Seiichirou, Sennan-gun Osaka 590-0458 (JP)
(74) Representative: Boult Wade Tennant LLP
(86) International application number: PCT/JP2018/033071
(87) International publication number: WO 2019/097820

(56) References cited:
- WO-A1-01/65161
- WO-A1-01/94829
- CN-A- 106 317 598
- JP-A- 2005 127 503
- JP-A- 2005 186 370
- JP-A- 2006 009 957
- JP-A- 2006 341 559
- JP-A- 2007 196 522
- JP-A- 2011 162 668
- JP-A- 2016 515 053
- US-A1- 2003 012 906
- US-A1- 2003 062 190

## Description

### Technical Field

The present disclosure relates to a heat-resistant two-layer heat-shrinkable tube that is used to cover a bound portion of insulated wires, an end portion of a wire, or the like that requires high heat resistance and a method for covering an object to be covered with the heat-resistant two-layer heat-shrinkable tube.

### Background Art

Heat-shrinkable tubes are resin tubes that shrink by heating. A heat-shrinkable tube covering a bound portion of insulated wires, an end portion of a wire, or the like shrinks by heating in the shape of the covered portion and adheres to the portion. Thus, heat-shrinkable tubes are used for the protection, insulation, waterproofing, and anticorrosion of a bound portion of insulated wires, an end portion of a wire, or the like.

For example, Patent Literature 1 discloses a heat-shrinkable tube produced by extruding a fluoropolymer composition, which contains a partially hydrogenated fluoropolymer containing tetrafluoroethylene, hexafluoropropylene, and ethylene, and a polyfunctional monomer, in a tube shape, cross-linking the resin by electron-beam irradiation, and expanding the tube to impart the heat-shrinkable property.

Multilayer heat-shrinkable tubes that include an adhesive layer (inner layer) on the inner circumferential surface of a heat-shrinkable outer layer to improve adhesiveness to a bound portion of insulated wires, an end portion of a wire, or the like are also known as heat-shrinkable tubes. For example, Patent Literature 2 discloses a cylindrical thermally restorable article (= heat-shrinkable tube) that includes a substrate layer (outer layer) formed of a polyolefin resin, such as polyethylene or a polyolefin elastomer, and an adhesive layer (inner layer) formed of an ethylene-vinyl acetate copolymer or polyamide inside the substrate layer.

Patent Literature 3 discloses a multilayer heat-shrinkable tube having an adhesive layer on its inner surface that is produced by coextruding a radiation crosslinkable composition containing a fluoropolymer and a polyfunctional monomer and a fluoropolymer composition containing a fluoropolymer and an unsaturated compound having at least one polar group selected from the group consisting of an epoxy group and a carboxy group to form a two-layer tubular formed product having an outer layer formed of the radiation crosslinkable composition and an inner layer formed of the fluoropolymer composition,
irradiating the tubular formed product with ionizing radiation to cross-link the radiation crosslinkable composition in the outer layer and graft-modify the fluoropolymer composition in the inner layer, and
subsequently radially expanding the tubular formed product under heating, and then cooling the tubular formed product to fix the shape. CN 106 317 598 A discloses a heat-resistant two-layer heat-shrinkable tube comprising an outer layer and an inner layer in contact with an inner circumferential surface of the outer layer, wherein the outer layer consists of a cross-linked product of ETFE (tetrafluoroethylene-ethylene copolymers) and 0.1 parts or more by mass and 8 parts or less by mass of a cross-linking aid per 100 parts by mass of the resin, and the inner layer consists of a fluorine-containing hot-melt adhesive. US 2003/062190 A1 discloses a multi-layer insulation system for electrical conductors, including a polyimide or fluoropolymer inner layer, polyimide middle layer, and an extruded, crosslinked fluoropolymer outer layer. US 2003/012906 A1; discloses a multilayer resin tube.

### Citation List

### Patent Literature

PTL 1: Japanese Unexamined Patent Application Publication No. 2011-162668 (Claims)
PTL 2: WO 2016-174962 (Claims)
PTL 3: Japanese Unexamined Patent Application Publication No. 2005-48156 (Claim 8)

### Summary of Invention

### Problems to be Solved by Present Disclosure

Insulated wires insulated with a heat-resistant resin, for example, ETFE electric wires insulated with an ethylene-tetrafluoroethylene copolymer (ETFE), are used in applications that require high heat resistance, such as automotive applications and aircraft applications. Multilayer heat-shrinkable tubes used to ensure the protection or waterproofness of a bound portion of such heat-resistant insulated wires or an end portion of such a heat-resistant wire require high heat resistance, for example, thermal aging resistance and heat resistance without degradation or flowing of a resin of the tube even in use at 200°C for 1000 hours, and sufficient adhesiveness to an insulating coating of heat-resistant electric wires or a conductor.

Sufficient fluidity at a thermal shrinkage temperature is desired in a resin forming an inner layer (an adhesive layer on an inner surface) of a multilayer heat-shrinkable tube such that the resin can flow during thermal shrinkage and adhere closely to a bound portion of insulated wires or an end portion of a wire.

In a certain application field of a heat-resistant insulated wire, a multilayer heat-shrinkable tube for covering a bound portion or an end portion of a wire requires high flame resistance, or a multilayer heat-shrinkable tube requires high light transmittance (transparency) for visually determining the state of a bound portion or an end portion of a wire from the outside.

However, a multilayer heat-shrinkable tube described in Patent Literature 2 is a general-purpose heat-shrinkable tube, and the polyolefin resin constituting the substrate layer (outer layer) of the multilayer heat-shrinkable tube contains a mixture of a first polyolefin resin with a melting point of 125°C or more and 135°C or less and a second polyolefin resin with a melting point of less than 125°C (Claim 2). Thus, the resin flows and is likely to deteriorate at approximately 200°C at which heat-resistant insulated wires are used. Thus, the multilayer heat-shrinkable tube is not a heat-resistant heat-shrinkable tube that can withstand use at 200°C for 1000 hours. Although an ethylene-vinyl acetate copolymer or polyamide is used in the adhesive layer (inner layer) on the inner circumferential surface of the substrate layer in consideration of adhesion to a resin or metal, these resins flow or are likely to deteriorate in an operating environment at approximately 200°C and cannot have sufficient adhesion to ETFE electric wires.

In a multilayer heat-shrinkable tube described in Patent Literature 3, the fluoropolymer forming the outer layer or the inner layer is poly(vinylidene difluoride) (PVDF). Although Patent Literature 3 states that the inner layer has an adhesive strength of 1.0 kg/cm² or more to a metal sheet after accelerated degradation in a Gear oven at 150°C for 3000 hours, considering the heat resistance of PVDF, it is impossible to withstand use at 200°C for 1000 hours. Sufficient adhesion to ETFE electric wires also cannot be achieved.

Thus, in known multilayer heat-shrinkable tubes, a resin forming an outer layer or an inner layer has insufficient heat resistance and insufficient adhesiveness to ETFE electric wires. Thus, known multilayer heat-shrinkable tubes cannot be used to ensure the protection or waterproofness of a bound portion of heat-resistant insulated wires or an end portion of a heat-resistant wire, such as an ETFE electric wire. Furthermore, no multilayer heat-shrinkable tube with high flame resistance or transparency is known.

It is an object of the present disclosure to provide a heat-resistant two-layer heat-shrinkable tube including a heat-shrinkable outer layer and an adhesive layer (inner layer) formed on the inner circumferential surface of the outer layer. The two-layer heat-shrinkable tube has high thermal aging resistance without degradation of resin and high heat resistance without the flow of the adhesive layer (inner layer) even in long-term use at high temperatures at which ETFE electric wires are used. The two-layer heat-shrinkable tube has high adhesiveness to an insulating layer (ETFE) of ETFE electric wires and to a conductor (metal, such as copper). A resin in the adhesive layer has sufficient fluidity at a heating temperature for thermal shrinkage.

It is another object of the present disclosure to provide a method for covering an object to be covered with the heat-resistant two-layer heat-shrinkable tube. The covering method can provide a covering with good characteristics of high adherence and adhesiveness between the object to be covered and the tube, high thermal aging resistance without degradation of a resin of the tube, and high heat resistance without the flow of an adhesive layer even in long-term use at temperatures at which ETFE electric wires are to be used.

### Means for Solving the Problems

On the basis of study results, the present inventor has completed the present invention by finding that the objects can be achieved with a two-layer heat-shrinkable tube that includes
an outer layer formed of a cross-linked product of a resin composition containing a fluoropolymer selected from the group consisting of ETFEs with a melting point of 210°C or more and 260°C or less, acid-modified ETFEs with a melting point of 160°C or more and 260°C or less, and acid-modified ethylene-tetrafluoroethylene-hexafluoropropylene copolymers with a melting point of 150°C or more and 210°C or less (acid-modified EFEPs) in combination with a cross-linking aid, and
an inner layer serving as an adhesive layer, formed of a hot-melt adhesive that contains a fluoropolymer selected from the group consisting of acid-modified ETFEs and acid-modified EFEPs and is flowable even at 250°C.

A first aspect of the present disclosure that has been made to achieve the objects is
a heat-resistant two-layer heat-shrinkable tube including an outer layer and an inner layer in contact with the inner circumferential surface of the outer layer, wherein
the outer layer consists of a cross-linked product of a resin composition containing a resin selected from the group consisting of ETFEs with a melting point of 210°C or more and 260°C or less, acid-modified ETFEs with a melting point of 160°C or more and 260°C or less, and acid-modified EFEPs with a melting point of 150°C or more and 210°C or less and 0.1 parts or more by mass and 8 parts or less by mass of a cross-linking aid per 100 parts by mass of the resin, the outer layer having a thermal shrinkage temperature of 250°C or more and 280°C or less, and
the inner layer consists of a hot-melt adhesive containing a resin selected from the group consisting of acid-modified ETFEs and acid-modified EFEPs, the hot-melt adhesive having a shear viscosity of less than 10000 Pa·s at 250°C and at a shear rate of 10 s⁻¹.

The present disclosure provides, as a preferred aspect of the first aspect, a heat-resistant two-layer heat-shrinkable tube in which the cross-linking aid is triallyl isocyanurate (TAIC) or trimethylolpropane triacrylate.

The present disclosure provides, as a preferred aspect of the first aspect, a heat-resistant two-layer heat-shrinkable tube in which the resin constituting the hot-melt adhesive has a melting point of 160°C or more and 240°C or less, and there is no flow (sagging) of the inner layer even after the tube is vertically held at 200°C for 1000 hours.

The present disclosure provides, as a preferred aspect of the first aspect, a heat-resistant two-layer heat-shrinkable tube in which the resin constituting the hot-melt adhesive has a melting point of 160°C or more and 200°C or less.

The present disclosure provides, as a preferred aspect of the first aspect, a heat-resistant two-layer heat-shrinkable tube, in which
the resin constituting the outer layer is a resin selected from the group consisting of ETFEs with a melting point of 230°C or less and acid-modified ETFEs with a melting point of 230°C or less, and
the resin constituting the inner layer is a resin selected from the group consisting of acid-modified EFEPs with a melting point of 230°C or less and acid-modified ETFEs with a melting point of 230°C or less.

A second aspect of the present disclosure is a method for covering an object to be covered, the method including the steps of covering the object to be covered with the heat-resistant two-layer heat-shrinkable tube according to the first aspect and, after this step, heating the heat-resistant two-layer heat-shrinkable tube to 250°C or more and 280°C or less for thermal shrinkage.

A third aspect of the present disclosure is a method for covering an object to be covered, the method including
a step 1 of melt-extruding a resin composition in a tube shape to form an outer layer, the resin composition containing a resin selected from the group consisting of ETFEs with a melting point of 210°C or more and 260°C or less, acid-modified ETFEs with a melting point of 160°C or more and 260°C or less, and acid-modified EFEPs with a melting point of 150°C or more and 210°C or less and 0.1 parts or more by mass and 8 parts or less by mass of a cross-linking aid per 100 parts by mass of the resin,
after the step 1, a step 2 of cross-linking the resin constituting the outer layer and subsequently expanding the outer layer to impart a heat-shrinkable property so as to shrink at 250°C or more and 280°C or less,
a step 3 of melt-extruding a hot-melt adhesive in a tube shape to form an inner layer, the hot-melt adhesive containing a resin selected from the group consisting of acid-modified ETFEs and acid-modified EFEPs, the hot-melt adhesive having a shear viscosity of less than 10000 Pa·s at 250°C and at a shear rate of 10 s⁻¹,
a step 4 of covering the object to be covered with the inner layer formed in the step 3,
a step 5 of covering the object to be covered covered with the inner layer with the outer layer formed in the step 2, and
a step 6 of heating the object to be covered covered with the outer layer at 250°C or more and 280°C or less to thermally shrink the outer layer.

### Advantageous Effects of Invention

The first aspect of the present disclosure provides a heat-resistant two-layer heat-shrinkable tube that includes a heat-shrinkable outer layer and an adhesive layer (inner layer) in contact with the inner circumferential surface of the outer layer and that thermally shrinks by heating at 250°C or more and 280°C or less. The heat-resistant two-layer heat-shrinkable tube has high thermal aging resistance and heat resistance without degradation of the resin or the flow of the adhesive layer even in long-term use at temperatures at which ETFE electric wires are to be used and has high adhesiveness to an insulating layer (ETFE) of ETFE electric wires and a conductor (metal, such as copper). The adhesive layer has sufficient fluidity when heated for thermal shrinkage.

Furthermore, a heat-resistant two-layer heat-shrinkable tube including an outer layer formed of ETFE with a melting point of 230°C or less or acid-modified ETFE with a melting point of 230°C or less and an inner layer formed of acid-modified EFEP with a melting point of 230°C or less or acid-modified ETFE with a melting point of 230°C or less has high flame resistance or transparency as well as high thermal aging resistance, heat resistance, and adhesiveness.

A method for covering an object to be covered according to the second or third aspect of the present disclosure can provide a covering that has high adherence and adhesiveness to an object to be covered, for example, an insulating layer of ETFE electric wires or a conductor, and has high thermal aging resistance and heat resistance without degradation of the resin or the flow of the adhesive layer or without a consequent decrease in adherence and adhesive strength, even in long-term use at temperatures at which ETFE electric wires are to be used.

### Brief Description of Drawings

[Fig. 1] Figure 1 is a schematic perspective view of a heat-resistant two-layer heat-shrinkable tube according to an embodiment of the present disclosure.
[Fig. 2] Figure 2 is a schematic cross-sectional view taken along the line a-a of Fig. 1.
[Fig. 3] Figure 3 is a schematic cross-sectional view taken along the line b-b of Fig. 1.

### Discription of Embodiments

Embodiments of the present disclosure will be more specifically described below. However, the present disclosure is not limited to these embodiments and may be modified within the scope and equivalents of the appended claims.

A first embodiment of the present disclosure is a heat-resistant two-layer heat-shrinkable tube including an outer layer and an inner layer in contact with the inner circumferential surface of the outer layer, wherein
the outer layer consists of a cross-linked product of a resin composition containing a resin selected from the group consisting of ETFEs with a melting point of 210°C or more and 260°C or less, acid-modified ETFEs with a melting point of 160°C or more and 260°C or less, and acid-modified EFEPs with a melting point of 150°C or more and 210°C or less and 0.1 parts or more by mass and 8 parts or less by mass of a cross-linking aid per 100 parts by mass of the resin, the outer layer having a thermal shrinkage temperature of 250°C or more and 280°C or less, and
the inner layer consists of a hot-melt adhesive containing a resin selected from the group consisting of acid-modified ETFEs and acid-modified EFEPs, the hot-melt adhesive having a shear viscosity of less than 10000 Pa·s at 250°C and at a shear rate of 10 s⁻¹.

The outer layer is formed of a cross-linked product of a resin composition containing a resin selected from the group consisting of ETFEs with a melting point of 210°C or more and 260°C or less, acid-modified ETFEs with a melting point of 160°C or more and 260°C or less, and acid-modified EFEPs with a melting point of 150°C or more and 210°C or less and 0.1 parts or more by mass and 8 parts or less by mass of a cross-linking aid per 100 parts by mass of the resin (a product formed by cross-linking the resin). Thus, the outer layer does not melt or deteriorate and has high heat resistance (thermal aging resistance), even in long-term use at temperatures at which heat-resistant insulated wires, such as ETFE electric wires, are used. The outer layer is a resin tube (pipe) that can thermally shrink by heating at 250°C or more and 280°C or less.

The inner layer is formed of a hot-melt adhesive containing a resin selected from the group consisting of acid-modified ETFEs and acid-modified EFEPs and therefore has high adhesiveness to an insulating layer (ETFE) of ETFE electric wires and a conductor (metal, such as copper). The inner layer has a shear viscosity of less than 10000 Pa·s at 250°C and at a shear rate of 10 s⁻¹ and therefore has sufficient fluidity even at a thermal shrinkage temperature of approximately 250°C. Furthermore, in the heat-shrinkable tube and the hot-melt adhesive, the resin does not deteriorate or flow even in long-term use at temperatures at which ETFE electric wires are to be used, more specifically even in storage at 200°C for 1000 hours. Furthermore, degradation, for example, due to ionizing radiation is less likely to occur during cross-linking of the resin forming the outer layer.

Thus, the first embodiment of the present disclosure provides a heat-resistant two-layer heat-shrinkable tube that includes a heat-shrinkable outer layer and an adhesive layer (inner layer) in contact with the inner circumferential surface of the outer layer and that has the following good characteristics when used to ensure the protection or waterproofness of a bound portion of heat-resistant insulated wires or an end portion of a heat-resistant wire.
- The heat-resistant two-layer heat-shrinkable tube has high thermal aging resistance and heat resistance without degradation of the resin or the flow of the adhesive layer even in long-term use at temperatures at which ETFE electric wires are to be used.
- The heat-resistant two-layer heat-shrinkable tube has high adhesiveness to an insulating layer (ETFE) of ETFE electric wires and a conductor (metal, such as copper).
- Because the resin in the adhesive layer has sufficient fluidity when heated for thermal shrinkage, when the heat-resistant two-layer heat-shrinkable tube is used, the adhesive layer flows along the shape of a portion to be covered and protected and ensures close adhesion to the portion during thermal shrinkage.

### [Structure of Heat-Resistant Two-Layer Heat-Shrinkable Tube according to First Embodiment]

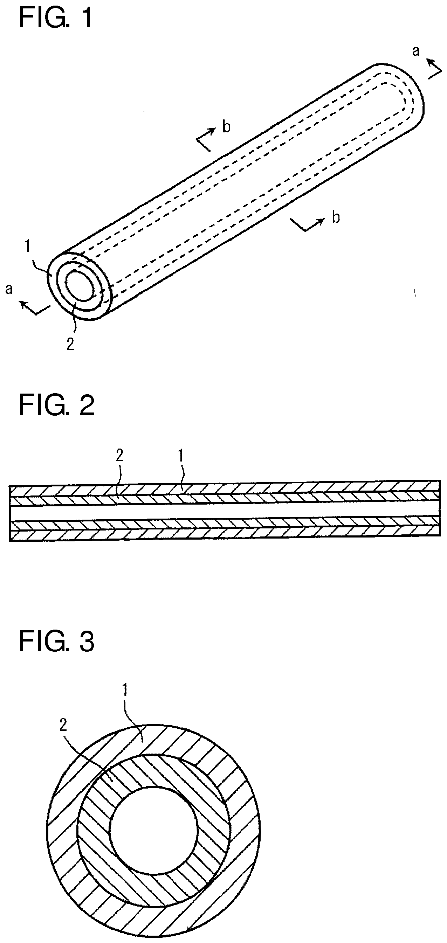

Figure 1 is a perspective view of the heat-resistant two-layer heat-shrinkable tube according to the first embodiment. Figure 2 is a schematic cross-sectional view taken along the line a-a of Fig. 1, and Fig. 3 is a schematic cross-sectional view taken along the line b-b of Fig. 1. In the figures, 1 denotes an outer layer, and 2 denotes an inner layer. As illustrated in Figs. 1 to 3, the inner layer 2 is in close contact with the inner circumferential surface of the outer layer 1.

The outer layer 1, which is formed of a cross-linked product of the resin, does not melt even at a heating temperature in the range of 250°C to 280°C and has high heat resistance. In the outer layer 1, a tube of the cross-linked product is formed and then expanded to impart the heat-shrinkable property (shape memory). Thus, the outer layer 1 thermally shrinks at a heating temperature of 250°C or more and 280°C or less.

The inner layer 2 is formed of a hot-melt adhesive that has sufficient fluidity at a thermal shrinkage temperature of approximately 250°C. Thus, when the inner layer 2 covering a bound portion of insulated wires or an end portion of a wire thermally shrinks, the inner layer 2 flows along the shape of the portion and adheres to the portion.

The preferred ranges of the diameter of the tube and the thicknesses of the outer layer and the inner layer depend on the application and are not limited to particular ranges. The inner diameter often ranges from 1.0 mm or more and 30 mm or less, and the thickness of the outer layer often ranges from 0.1 mm or more and 10 mm or less. It is desirable that the thickness of the inner layer be designed so that the flow of the hot-melt adhesive forming the inner layer due to the thermal shrinkage of the tube can ensure protection or waterproof of a bound portion of insulated wires or an end portion of a wire to be covered with the heat-shrinkable tube. Thus, the preferred range of the thickness of the inner layer depends on the size or shape of a portion such as a bound portion of insulated wires or an end portion of a wire and is not limited to particular range.

### [Materials Forming Outer Layer]

The outer layer is a tube formed of a resin composition containing a resin selected from the group consisting of ETFEs with a melting point of 210°C or more and 260°C or less, acid-modified ETFEs with a melting point of 160°C or more and 260°C or less, and acid-modified EFEPs with a melting point of 150°C or more and 210°C or less and a cross-linking aid, and the resin is cross-linked by ionizing radiation or the like.

ETFEs with a melting point of 210°C or more and 260°C or less include commercial products such as Fluon LM730AP (melting point 225°C) manufactured by Asahi Glass Co., Ltd. and Neoflon EP526 (melting point 255°C) manufactured by Daikin Industries, Ltd.

Acid-modified ETFEs with a melting point of 160°C or more and 260°C or less include commercial products such as Fluon AH2000 (melting point 240°C) and Fluon LH8000 (melting point 180°C) manufactured by Asahi Glass Co., Ltd.

Acid-modified EFEPs with a melting point of 150°C or more and 210°C or less include commercial products such as Neoflon RP5000 (melting point 200°C) and Neoflon RP4020 (melting point 160°C) manufactured by Daikin Industries, Ltd.

The term "acid-modified" means that an acid such as maleic anhydride is grafted onto a polymer chain, or a carboxy group is present at an end of a resin.

The resin forming the outer layer may be a mixture of the resins.

A tube that can thermally shrink at a heating temperature in the range of 250°C to 280°C can be produced by choosing the resin as a resin constituting the outer layer, the resin having a melting point in the above range, and cross-linking and then expanding a resin composition containing 0.1 parts or more by mass and 8 parts or less by mass of a cross-linking aid per 100 parts by mass of the resin. When the resin constituting the outer layer has a melting point below the lower limit, high heat resistance and thermal aging resistance intended by the present disclosure cannot be achieved. When the resin has a melting point above the upper limit, heating at a high temperature of more than 280°C is required for thermal shrinkage, which causes greater damage to electric wires and the inner layer.

The cross-linking aid constituting the outer layer is added to promote cross-linking of the resin. For cross-linking of the resin (formation of a cross-linked product) by ionizing radiation, the cross-linking aid is preferably TAIC or trimethylolpropane triacrylate. These compounds can be used as cross-linking aids to sufficiently cross-link the resin and to make it easy to adjust the thermal shrinkage temperature in the above range.

The amount of cross-linking aid in the resin composition ranges from 0.1 parts or more by mass to 8 parts or less by mass per 100 parts by mass of the resin. When the amount of cross-linking aid is less than 0.1 parts by mass, ionizing radiation with an increased radiation dose even results in insufficient cross-linking of the resin and provides no shape memory for the heat-shrinkable tube. A large amount of cross-linking aid above 8 parts by mass increases the hardness of the resin formed by cross-linking, making it difficult to expand the heat-shrinkable tube. Thus, it is difficult to impart the heat-shrinkable property by expansion.

In addition to the resin and the cross-linking aid, the materials forming the outer layer may include other additive agents, as required, without departing from the gist of the present invention. Other additive agents include antioxidants, copper inhibitors, lubricants, colorants, heat stabilizers, and ultraviolet absorbers.

### [Materials Forming Inner Layer]

The acid-modified ETFEs and acid-modified EFEPs may be those used in the resin forming the outer layer. The hot-melt adhesive constituting the inner layer may be composed only of a resin selected from the group consisting of acid-modified ETFEs and acid-modified EFEPs and may contain another component in combination with the resin, without departing from the gist of the present invention. The resin preferably constitutes 80% or more by mass, more preferably 85% or more by mass, of the hot-melt adhesive.

The hot-melt adhesive forming the inner layer has a shear viscosity of less than 10000 Pa·s, preferably less than 8000 Pa·s, more preferably less than 6000 Pa·s, at 250°C and at a shear rate of 10 s⁻¹. A shear viscosity in these ranges results in an adequate flow during thermal shrinkage of the heat-shrinkable tube at a temperature of approximately 250°C, improved adhesion to a portion to be covered, and high waterproofness.

When the hot-melt adhesive contains other components described above, the shear viscosity is the viscosity after the other components are added. As described later, when the outer layer is cross-linked after adhesion between the outer layer and the inner layer in the production of the heat-resistant two-layer heat-shrinkable tube, the inner layer may also be influenced by cross-linking. For example, when the resin forming the outer layer is cross-linked by ionizing radiation, the hot-melt adhesive forming the inner layer may also be exposed to the ionizing radiation. In such a case, the shear viscosity is the viscosity after the influence of cross-linking of the outer layer, for example, after ionizing radiation. Thus, the resin constituting the hot-melt adhesive is a resin selected from the group consisting of acid-modified ETFEs and acid-modified EFEPs and is selected from resins that can have a shear viscosity (a shear viscosity after the addition of another component when the hot-melt adhesive contains the other component or a shear viscosity after ionizing radiation when the hot-melt adhesive is exposed to ionizing radiation) in the above range.

The resin constituting the hot-melt adhesive forming the inner layer preferably has a melting point of 160°C or more and 240°C or less. A heat-resistant two-layer heat-shrinkable tube including the inner layer that does not flow even after vertically held at 200°C for 1000 hours can be produced by forming the inner layer in contact with the inner circumferential surface of the outer layer from a resin selected from the group consisting of acid-modified ETFEs and acid-modified EFEPs and having a melting point of 160°C or more.

A resin with a melting point of 240°C or less can be selected so that the hot-melt adhesive can have a shear viscosity of less than 10000 Pa·s at 250°C and at a shear rate of 10 s⁻¹ even when the hot-melt adhesive contains another component or even when the hot-melt adhesive is exposed to ionizing radiation. By contrast, the use of a resin with a melting point of more than 240°C makes it difficult to adjust the shear viscosity to be less than 10000 Pa·s, possibly resulting in low fluidity at the thermal shrinkage temperature.

The resin constituting the hot-melt adhesive more preferably has a melting point of 160°C or more and 200°C or less. A resin with a melting point of 200°C or less can be used to further increase the fluidity of the inner layer during thermal shrinkage, further improve adhesion to a portion to be covered, and further improve waterproofness.

Other additive agents that can be added to the materials forming the inner layer, as required, in combination with the resin, without departing from the gist of the present invention include antioxidants, copper inhibitors, antidegradants, viscosity modifiers, flame retardants, lubricants, colorants, heat stabilizers, ultraviolet absorbers, and adhesives. For example, when the resins to form the outer layer and the inner layer are coextruded to form a two-layer tube and the resin of the outer layer is cross-linked by ionizing radiation, it is desirable to reduce the degradation of the inner layer caused by radiation, and an antidegradant can be added to the materials for the inner layer to reduce the degradation.

### [Resins Forming Heat-Resistant Two-Layer Heat-Shrinkable Tube with High Flame Resistance and Transparency]

A heat-resistant two-layer heat-shrinkable tube that includes an outer layer consisting of a cross-linked product of a resin composition containing a resin selected from the group consisting of ETFEs with a melting point of 230°C or less and acid-modified ETFEs with a melting point of 230°C or less and 0.1 parts or more by mass and 8 parts or less by mass of a cross-linking aid per 100 parts by mass of the resin, the outer layer having a thermal shrinkage temperature of 250°C or more and 280°C or less, and that includes an inner layer consisting of a hot-melt adhesive containing a resin selected from the group consisting of acid-modified EFEPs with a melting point of 230°C or less and acid-modified ETFEs with a melting point of 230°C or less, the hot-melt adhesive having a shear viscosity of less than 10000 Pa·s at 250°C and at a shear rate of 10 s⁻¹, has high flame resistance and transparency as well as the high thermal aging resistance, heat resistance, and adhesiveness. For example, the flame resistance satisfies the VW-1 vertical flame test described in UL 224, and the transparency refers to a light transmittance of 50% or more at 550 nm when the total thickness of the inner layer and the outer layer of the tube is 1.4 mm.

When the resin constituting the outer layer, whether ETFE or acid-modified ETFE, has a melting point of more than 230°C, and when the resin constituting the inner layer, whether acid-modified EFEP or acid-modified ETFE, has a melting point of more than 230°C, both cases result in low transparency with a light transmittance of less than 50%.

To achieve high transparency, the cross-linking aid is preferably TAIC. The resins may be used in combination with another component. The other component should be selected so as not to decrease the transparency of the tube, and the amount of the other component should be 20% or less by mass.

### [Formation of Outer Layer and Inner Layer (Extrusion of Resins)]

The outer layer and the inner layer can be formed by melt-extruding their materials in a tube shape with a known extruder. The resins to form the outer layer and the inner layer may be simultaneously extruded (coextruded), or the resin to form the outer layer and the resin to form the inner layer may be independently extruded in a tube shape to form each pipe (tube). Thus, the outer layer and the inner layer may be individually (independently) formed.

Independent formation of the outer layer and the inner layer is preferred due to the advantages that no coextruder is needed and that the linear velocity of extrusion can be easily increased due to independent extrusion. It is also preferred because when the resin in the outer layer is cross-linked by ionizing radiation, the inner layer is not exposed to ionizing radiation and is not degraded by radiation.

There is another advantage that inner layers with different thicknesses can be differently formed and bonded to the inner circumferential surface of the outer layer to adjust the thicknesses of the inner layers for different portions.

### [Cross-Linking and Expansion of Resin Forming Outer Layer]

The resin forming the outer layer of the heat-resistant two-layer heat-shrinkable tube according to the present embodiment is cross-linked to form a cross-linked product in a process of producing the heat-resistant two-layer heat-shrinkable tube. The cross-linking of the resin enables the outer layer to be expanded to impart the heat-shrinkable property (shape memory) to the outer layer.

Although the cross-linking may be performed after a combination of the outer layer and the inner layer, for example, by coextrusion, the cross-linking is preferably performed after the formation of the outer layer and before a combination with the inner layer to avoid degradation of the resin forming the inner layer due to cross-linking of the outer layer. Although the resin forming the inner layer is less likely to deteriorate in cross-linking, the resin may deteriorate depending on the cross-linking method and conditions. Thus, in the case of cross-linking after a combination of the outer layer and the inner layer by coextrusion, the cross-linking method and the cross-linking conditions are preferably selected to suppress the degradation of the inner layer due to cross-linking of the outer layer, or the addition of an antidegradant to the inner layer is also preferred.

The cross-linking method is cross-linking by ionizing radiation, chemical cross-linking, or thermal crosslinking, for example. Cross-linking by ionizing radiation is preferred due to its simple process and no influence of water and cross-linking residues. The ionizing radiation may be corpuscular radiation, such as α radiation, β radiation, or electron beams, or high-energy electromagnetic waves, such as X-rays and γ radiation. Among these, electron beams and γ radiation are preferred in terms of controllability and safety.

The radiation dose of the ionizing radiation is not particularly limited. For example, the radiation dose of electron-beam irradiation is preferably 10 kGy or more and 300 kGy or less to achieve a sufficient cross-linking density and to suppress the degradation of the resin due to irradiation.

Cross-linking by ionizing radiation may be performed at normal temperature or at a high temperature, for example, at approximately 250°C. High temperatures are preferred in terms of improved cross-linking efficiency and a decreased radiation dose.

After the resin in the outer layer is cross-linked, the outer layer is expanded to impart the heat-shrinkable property (shape memory). The expansion can be performed by heating the outer layer to at least a thermal shrinkage temperature (250°C to 280°C), expanding the outer layer to a predetermined inner diameter, and cooling the outer layer to fix the shape. The outer layer can be expanded, for example, by introducing compressed air therein. The expansion is typically performed such that the inner diameter is increased by approximately 1.2 to 5 times. A heat-resistant two-layer heat-shrinkable tube with the heat-shrinkable property is produced by the expansion.

### [Adhesion between Outer Layer and Inner Layer]

In coextrusion of the resins for the outer layer and the inner layer, the outer circumferential surface of the inner layer adheres to the inner circumferential surface of the outer layer during extrusion. The resin constituting the outer layer is cross-linked by ionizing radiation or the like after the coextrusion.

When the outer layer and the inner layer are independently formed, the inner circumferential surface of the outer layer adheres to the outer circumferential surface of the inner layer by covering an object to be covered with the inner layer, then covering the outer circumferential surface of the inner layer with the outer layer to which the heat-shrinkable property is imparted by cross-linking and expansion, and subsequently thermally shrinking the outer layer.

### [Applications]

The heat-resistant two-layer heat-shrinkable tube according to the first embodiment can cover a bound portion of heat-resistant electric wires, such as ETFE electric wires, or an end portion of a wire and adhere to the portion by thermal shrinkage. Thus, the heat-resistant two-layer heat-shrinkable tube can be suitably used to protect the portion and ensure waterproofness. In particular, the heat-resistant two-layer heat-shrinkable tube can be suitably applied to applications that require high heat resistance, such as automotive applications and aircraft applications.

A second embodiment of the present disclosure is a method for covering an object to be covered, the method including the steps of covering the object to be covered with the heat-resistant two-layer heat-shrinkable tube according to the first embodiment and, after this step, heating the heat-resistant two-layer heat-shrinkable tube to 250°C or more and 280°C or less for thermal shrinkage.

The object to be covered may be a bound portion of heat-resistant electric wires, such as ETFE electric wires, or an end portion of a wire.

The thermal shrinkage step can be performed by heating the heat-resistant two-layer heat-shrinkable tube to 250°C or more and 280°C or less.

The heat-resistant two-layer heat-shrinkable tube according to the first embodiment can be heated at 250°C or more to achieve sufficient thermal shrinkage. However, heating at a temperature of more than 280°C undesirably causes damage to electric wires and the inner layer.

The inner layer of the heat-resistant two-layer heat-shrinkable tube according to the first embodiment has high adhesiveness to an insulating layer (ETFE) of ETFE electric wires and a conductor (metal, such as copper) and has sufficient fluidity when heated to approximately 250°C. The heat-resistant two-layer heat-shrinkable tube has high thermal aging resistance and heat resistance without degradation of the resin or the flow of the adhesive layer even in long-term use at temperatures at which ETFE electric wires are to be used. Thus, the method according to the second embodiment for covering with the heat-resistant two-layer heat-shrinkable tube according to the first embodiment can provide a covering that has high adherence and adhesiveness to an object to be covered, for example, an insulating layer of ETFE electric wires or a conductor, and has high thermal aging resistance and heat resistance without degradation of the resin or the flow of the adhesive layer or without a consequent decrease in adherence and adhesive strength, even in long-term use at temperatures at which ETFE electric wires are to be used.

A third embodiment of the present disclosure is a method for covering an object to be covered, the method including
a step 1 of melt-extruding a resin composition in a tube shape to form an outer layer, the resin composition containing a resin selected from the group consisting of ETFEs with a melting point of 210°C or more and 260°C or less, acid-modified ETFEs with a melting point of 160°C or more and 260°C or less, and acid-modified EFEPs with a melting point of 150°C or more and 210°C or less and 0.1 parts or more by mass and 8 parts or less by mass of a cross-linking aid per 100 parts by mass of the resin,
after the step 1, a step 2 of cross-linking the resin constituting the outer layer and subsequently expanding the outer layer to impart a heat-shrinkable property so as to shrink at 250°C or more and 280°C or less,
a step 3 of melt-extruding a hot-melt adhesive in a tube shape to form an inner layer, the hot-melt adhesive containing a resin selected from the group consisting of acid-modified ETFEs and acid-modified EFEPs, the hot-melt adhesive having a shear viscosity of less than 10000 Pa·s at 250°C and at a shear rate of 10 s⁻¹,
a step 4 of covering the object to be covered with the inner layer formed in the step 3,
a step 5 of covering the object to be covered covered with the inner layer with the outer layer formed in the step 2, and
a step 6 of heating the object to be covered covered with the outer layer at 250°C or more and 280°C or less to thermally shrink the outer layer.

The object to be covered may be a bound portion of heat-resistant electric wires, such as ETFE electric wires, or an end portion of a wire, as in the second embodiment.

The steps 1 and 3 in the third embodiment can be performed in the same manner as in "a method for individually (independently) forming the outer layer and the inner layer" described in the first embodiment.

The step 2 can be performed in the same manner as in "Cross-Linking and Expansion of Resin Forming Outer Layer" described in the first embodiment.

In the step 4, the object to be covered is covered with the inner layer formed in the step 3. After the step 4, the step 5 is performed in which the object to be covered covered with the inner layer is further covered with the outer layer formed in the step 2. Because the heat-shrinkable property is imparted to the outer layer formed in the step 2 by cross-linking of the resin and expansion, in the step 6, the object to be covered covered with the outer layer is heated at 250°C or more and 280°C or less to thermally shrink the outer layer. Upon the thermal shrinkage of the outer layer, the inner circumferential surface of the outer layer adheres to the outer circumferential surface of the inner layer, and the inner layer also shrinks and adheres to the outer circumferential surface of the object to be covered.

The inner layer has the same structure and characteristics as the inner layer of the heat-resistant two-layer heat-shrinkable tube according to the first embodiment. Thus, the inner layer has high adhesiveness to an insulating layer (ETFE) of ETFE electric wires and a conductor (metal, such as copper) and has sufficient fluidity when heated at 250°C or more and 280°C or less. The heat-resistant two-layer heat-shrinkable tube has high thermal aging resistance and heat resistance without degradation of the resin or the flow of the adhesive layer even in long-term use at temperatures at which ETFE electric wires are to be used. Thus, the covering method according to the third embodiment can provide a covering that has high adherence and adhesiveness to an object to be covered, for example, an insulating layer of ETFE electric wires or a conductor, and has high thermal aging resistance and heat resistance without degradation of the resin or the flow of the adhesive layer or without a consequent decrease in adherence and adhesive strength, even in long-term use at temperatures at which ETFE electric wires are to be used.

### EXAMPLES

### (1) Materials Used in Experimental Examples

### a) Resins for Outer Layer and Inner Layer

ETFE (without acid modification)
   - Fluon LM730AP (melting point 225°C, manufactured by Asahi Glass Co., Ltd.: hereinafter referred to as "ETFE1")
   - Neoflon EP526 (melting point 255°C, manufactured by Daikin Industries, Ltd.: hereinafter referred to as "ETFE2")
Maleic-anhydride-modified EFEP (adhesive EFEP):
   - Neoflon RP5000 (melting point 200°C, manufactured by Daikin Industries, Ltd.: hereinafter referred to as "EFEP1")
   - Neoflon RP4020 (melting point 160°C, manufactured by Daikin Industries, Ltd.: hereinafter referred to as "EFEP2")
Maleic-anhydride-modified ETFE (adhesive ETFE):
   - Fluon AH2000 (melting point 240°C, manufactured by Asahi Glass Co., Ltd.: hereinafter referred to as "ETFE3 ")
   - Fluon LH8000 (melting point 180°C, manufactured by Asahi Glass Co., Ltd.: hereinafter referred to as "ETFE4")
PVDF
   - Kynar 705 (melting point 175°C: manufactured by Mitsubishi Chemical Corporation: hereinafter referred to as "PVDF1")

### b) Cross-linking aids (polyfunctional monomers)

- triallyl isocyanurate (manufactured by Nippon Kasei Chemical Co., Ltd.: TATC)
- trimethylolpropane triacrylate (manufactured by DIC: TD1500s)

### (2) Evaluation of Resins for Inner Layer

### a) Evaluation of Shear Adhesive Strength and Tube Formability before Electron-Beam Irradiation

### (Preparation of Samples for Evaluation of Shear Adhesive Strength)

A resin listed in Tables 1 and 2 was extruded with a known melt extruder to form a sheet 0.5 mm in thickness. The sheet was cut into a resin sheet A 5 mm in width and 40 mm in length. A resin composition containing 100 parts by mass of ETFE1 and 1 part by mass of TAIC (a resin composition of Experiment 11 for an outer layer described later) was extruded with a known melt extruder to form a sheet 0.5 mm in thickness. The sheet was cut into a resin sheet A2 5 mm in width and 10 mm in length. The resin sheet A placed between two resin sheets A2 was press-bonded at 250°C and at 0.3 MPa for 20 seconds to prepare a sample for evaluation of shear adhesive strength.

### (Measurement of Shear Adhesive Strength)

The shear adhesive strength of each sample thus prepared was measured three times with a tensile tester (manufactured by Shimadzu Corporation) at 23°C and at a crosshead speed of 200 mm/min. The average value (unit: N/cm²) of the measurements was calculated and listed in Unirradiated "Shear adhesive strength (ETFE)" in Tables 1 and 2.

### (Evaluation of Tube Formability)

A resin listed in Tables 1 and 2 was extruded with a known melt extruder to form a tube, and tube formability was evaluated according to the following criteria. The results are listed in Unirradiated "Tube formability" in Tables 1 and 2.
Good: a constant thickness (0.5 ± 0.2 mm), no depletion of resin, and no rough appearance during 1000-m extrusion
Poor: at least one problem of a thickness outside the range of 0.5 ± 0.2 mm, depletion of resin, rough appearance, and an inner diameter outside the range of 1.0 mmφ ± 0.2 mm during 1000-m extrusion

### b) Measurement of Shear Viscosity and Shear Adhesive Strength and Evaluation of Sagging Distance (Degree of Flow) after Electron-Beam Irradiation

### (Measurement of Shear Viscosity)

A resin listed in Tables 1 and 2 was formed into a sheet and was irradiated with an electron beam at a radiation dose listed in Tables 1 and 2. Subsequently, shear viscosity (Pa·s) was measured with a rotational rheometer ("MCR302": manufactured by Anton Paar GmbH) at a temperature of 250°C and at a shear rate of 10 s⁻¹. The measured values are listed in "Shear viscosity" in Tables 1 and 2.

### (Measurement of Shear Adhesive Strength)

A resin listed in Tables 1 and 2 was extruded with a known melt extruder to form a sheet, and the sheet was then irradiated with an electron beam at the radiation doses listed in Tables 1 and 2 to prepare a resin sheet B.

A resin composition containing 100 parts by mass of ETFE1 and 1 part by mass of TAIC (a resin composition of Experiment 11 for an outer layer described later) was extruded with a known melt extruder to form a sheet 0.5 mm in thickness. The sheet was cut into a resin sheet B2 5 mm in width and 10 mm in length. The resin sheet B placed between two resin sheets B2 was press-bonded at 250°C and at 0.3 MPa for 20 seconds to prepare a sample for evaluation of shear adhesive strength. This sample is hereinafter referred to as a sample 1. The shear adhesive strength of the sample 1 was measured in the same manner as in (Measurement of Shear Adhesive Strength) described above, and the results are listed in "Shear adhesive strength (ETFE)" After irradiation in Tables 1 and 2.

The resin sheet B placed between two copper foils 5 mm in width, 10 mm in length, and 0.2 mm in thickness was press-bonded at 250°C and at 0.3 MPa for 20 seconds to prepare a sample for evaluation of shear adhesive strength. This sample is hereinafter referred to as a sample 2. The shear adhesive strength of the sample 2 was measured in the same manner as in (Measurement of Shear Adhesive Strength) described above, and the results are listed in "Shear adhesive strength (Cu)" After irradiation in Tables 1 and 2.

After the sample 1 was stored at 200°C for 1000 hours, the shear adhesive strength was measured in the same manner as in (Measurement of Shear Adhesive Strength) described above, and the results are listed in "Shear adhesive strength (after aging)" After irradiation in Tables 1 and 2.

### (Evaluation of Sagging Distance (Degree of Flow))

A resin composition containing 100 parts by mass of ETFE1 and 1 part by mass of TAIC (a resin composition of Experiment 11 for an outer layer described later) was formed into a sheet and was irradiated with an electron beam at the radiation doses listed in Tables 1 and 2 to prepare a resin sheet 30 mm in width, 50 mm in length, and 0.5 mm in thickness. The resin sheet thus prepared was placed on a resin sheet 5 mm in width, 20 mm in length, and 0.5 mm in thickness, which was formed by extruding a resin listed in Tables 1 and 2 with a known melt extruder, such that the upper ends of the resin sheets were adjusted. The resin sheets were then press-bonded at 250°C and at 0.3 MPa for 20 seconds to prepare a sample for evaluation of sagging distance.

After the sample was vertically held and stored at 200°C for 1000 hours, the distance between a lower end position of a sheet of a resin listed in Tables 1 and 2 and the lower end position at the time of bonding (at the beginning of storage) (initial position) was measured. The results are listed in "Sagging distance (cross-linked ETFE)" After irradiation in Tables 1 and 2.

High-pressure process polyethylene (LDPE) was cross-linked by electron-beam irradiation at a radiation dose of 300 kGy to prepare a cross-linked PE sheet 30 mm in width, 50 mm in length, and 0.5 mm in thickness. The cross-linked PE sheet thus prepared was placed on a resin sheet 5 mm in width, 20 mm in length, and 0.5 mm in thickness, which was formed by extruding a resin listed in Tables 1 and 2 with a known melt extruder, such that the upper ends of the resin sheets were adjusted. The resin sheets were then press-bonded at 250°C and at 0.3 MPa for 20 seconds to prepare a sample for evaluation of sagging distance. The sagging distance of this sample was measured in the same manner as described above, and the results are listed in "Sagging distance (cross-linked PE)" After irradiation in Tables 1 and 2.

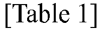

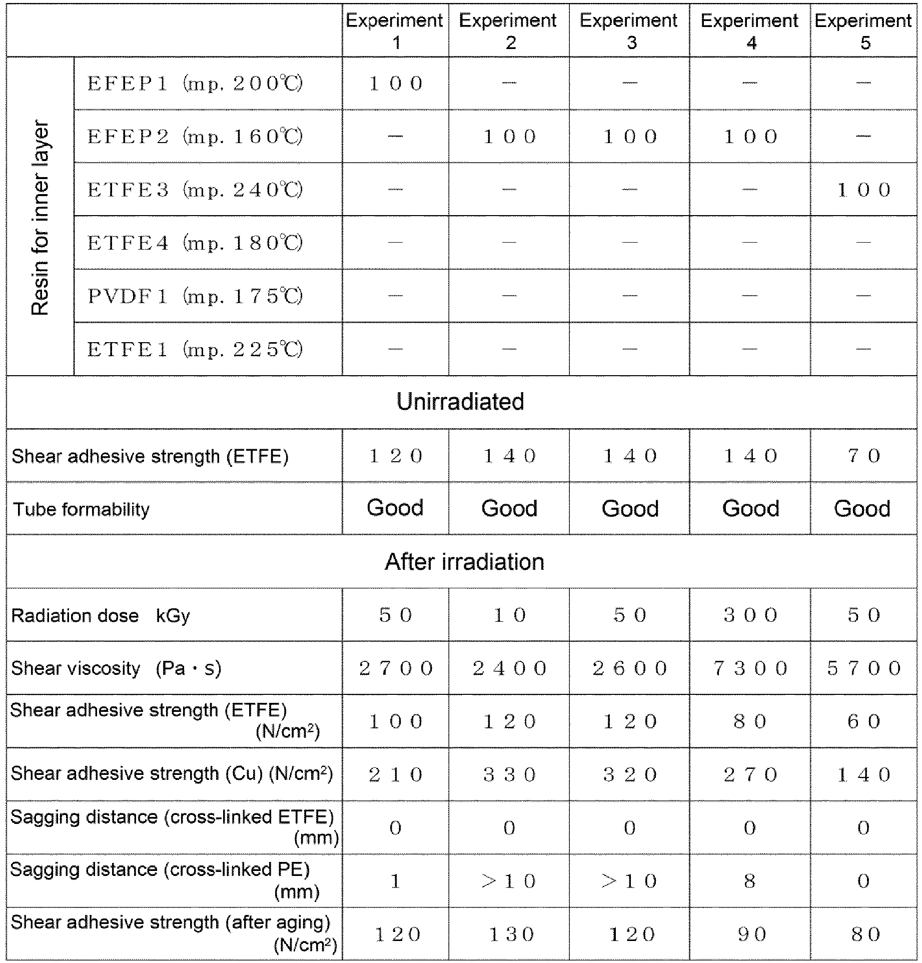

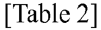

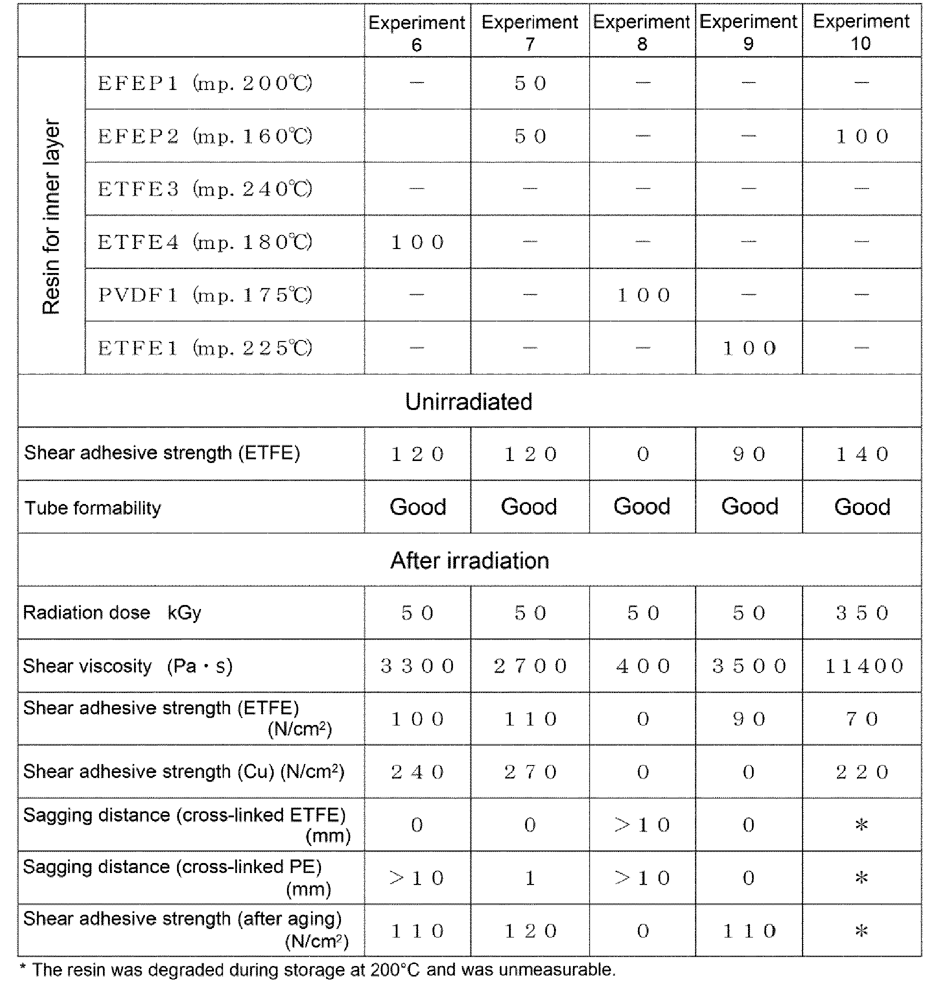

The experimental results in Tables 1 and 2 show the following 1) to 5).
1) In the experimental examples 1 to 7, in which the inner layer is formed of a resin selected from the group consisting of acid-modified ETFEs and acid-modified EFEPs,
   the resin has a shear viscosity of less than 10000 Pa·s at 250°C and at a shear rate of 10 s⁻¹ and has high fluidity at 250°C,
   the shear adhesive strength for ETFE is more than 50 N/cm², and the shear adhesive strength for copper is also more than 50 N/cm², and the adhesive strength for ETFE (insulating layer) and copper (conductor) is high,
   even after the tube is vertically held at 200°C for 1000 hours, the shear adhesive strength for ETFE is more than 50 N/cm², and the thermal aging resistance and heat resistance are high, and
   when cross-linked ETFE is bonded to the inner layer, the sagging distance is 1 mm or less even after the tube is vertically held at 200°C for 1000 hours, and the resin is less likely to flow even in a high-temperature operating environment in which ETFE electric wires are used.
2) In the experimental example 8, in which the inner layer is formed of PVDF, the shear adhesive strength for ETFE and copper is almost zero, which indicates no adhesion to ETFE and copper. When cross-linked ETFE is bonded to the inner layer, the sagging distance is more than 10 mm after the tube is vertically held at 200°C for 1000 hours, the resin flows in a high-temperature operating environment in which ETFE electric wires are used, and the heat resistance is poor.
3) In the experimental example 9, in which the inner layer is formed of ETFE without acid modification, the shear adhesive strength for copper is almost zero, which indicates no adhesion to copper.
4) In the experimental example 10, in which the inner layer is formed of acid-modified ETFE, the radiation dose is 350 kGy, the shear viscosity is 10000 Pa·s or more, and the resin is degraded at 200°C for 1000 hours and is not used in a high-temperature operating environment in which ETFE electric wires are used.
   In the experimental examples 2 and 4, in which the inner layer is formed of acid-modified ETFE, and the radiation dose is 10 kGy and 300 kGy, respectively, the shear viscosity is less than 10000 Pa·s, and the tube can withstand use at 200°C for 1000 hours.
   These results show that (for irradiation after a combination of the outer layer and the inner layer) the radiation dose is preferably 10 kGy or more and 300 kGy or less.
5) When cross-linked PE is bonded to the inner layer, in the experimental examples 2 to 4, in which the inner layer is formed of acid-modified ETFE with a melting point of 160°C, the sagging distance is large after the tube is vertically held at 200°C for 1000 hours. However, as described above, when cross-linked ETFE is bonded to the inner layer, the sagging distance is zero after the tube is vertically held at 200°C for 1000 hours in the experimental examples 2 to 4, and the resin is less likely to flow even in a high-temperature operating environment in which ETFE electric wires are used.

### (3) Evaluation of Resin Composition for Outer Layer

### (Preparation of Samples for Evaluation of Shear Adhesive Strength)

A composition containing a resin and a polyfunctional monomer (cross-linking aid) listed in Tables 3 to 5 was melt-blended in a twin-screw mixer to prepare a resin composition and was extruded with a known melt extruder to form a sheet 0.5 mm in thickness. Subsequently, after electron-beam irradiation at a radiation dose listed in Tables 3 to 5, the sheet was cut into a resin sheet C of a predetermined size.

A resin sheet 5 mm in width, 10 mm in length, and 0.5 mm in thickness was formed from EFEP2 (the resin for the inner layer in the experiment 3 listed in Table 1), was placed on a resin sheet C, and was press-bonded at 250°C and at 0.3 MPa for 20 seconds to prepare a sample for evaluation of shear adhesive strength.

### (Measurement of Shear Adhesive Strength)

The shear adhesive strength of each sample thus prepared was measured three times with a tensile tester (manufactured by Shimadzu Corporation) at 23°C and at a crosshead speed of 200 mm/min. The average value (unit N/cm²) of the measurements was calculated and listed in "Shear adhesive strength" in Tables 3 to 5.

### (Evaluation of Extrusion Formability)

A resin and a polyfunctional monomer of a composition listed in Tables 3 to 5 were melt-blended in a twin-screw mixer to prepare a resin composition (a composition composed of a single component required no mixing). The resin composition was used to form the outer layer, and the resin for the inner layer in the experiment 3 listed in Table 1 was used to form the inner layer. The resin composition and the resin were melt-extruded with a known melt extruder to form a tubular two-layer extrudate including the outer layer 2.2 mm in inner diameter and 0.7 mm in thickness and the inner layer (adhesive layer) 0.8 mm in inner diameter and 0.7 mm in thickness. No breakage during extrusion was considered to be good appearance and was rated as pass in Extrusion formability in Tables 3 to 5, and breakage was rated as failure.

### (Evaluation of Expandability)

A resin and a polyfunctional monomer of a composition listed in Tables 3 to 5 were melt-blended in a twin-screw mixer to prepare a resin composition (a composition composed of a single component required no mixing). The resin composition was extruded with a known melt extruder to form a tubular monolayer extrudate 2.2 mm in inner diameter and 0.7 mm in thickness. The monolayer extrudate was exposed to irradiation at a radiation dose listed in Tables 3 to 5 and was then tested for expandability by expanding the extrudate at 250°C to an inner diameter of 4.4 mm (expanded to twice its size). Extrudates that were expandable were rated as "Possible" in "Expandability" in Tables 3 to 5.

### (Evaluation of Waterproofness)

A resin composition prepared by melt-blending a resin and a polyfunctional monomer of a composition listed in Tables 3 to 5 in a twin-screw mixer (a composition composed of a single component required no mixing) was used to form an outer layer, and EFEP2 (the resin for the inner layer in the experiment 3 listed in Table 1) was used to form an inner layer. Thus, a two-layer extrudate was formed with a known melt extruder. The two-layer extrudate was irradiated with an electron beam at a radiation dose listed in Tables 3 to 5, was then expanded to twice its inner diameter, and was cooled to form a heat-shrinkable tube.

A weld of a harness formed by welding two insulated wires was covered with the heat-shrinkable tube, was horizontally placed on the floor in a thermostat at 250°C, and was heated for 90 seconds to shrink the heat-shrinkable tube and thereby closely adhere the heat-shrinkable tube to the weld. The sample thus prepared was placed in water, 200-kPa air was blown into one end of one of the insulated wires for 30 seconds, and was checked for the formation of bubbles in water. No bubbles was rated as pass, and the formation of bubbles was rated as failure. The results are listed in "Waterproofness" in Tables 3 to 5.

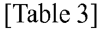

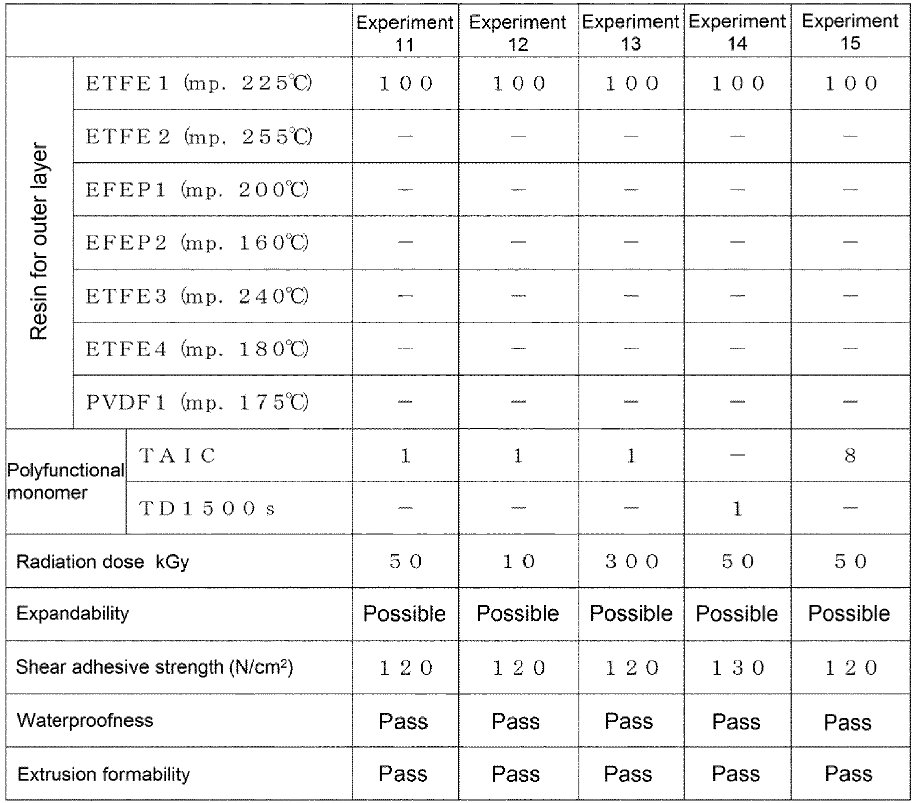

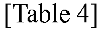

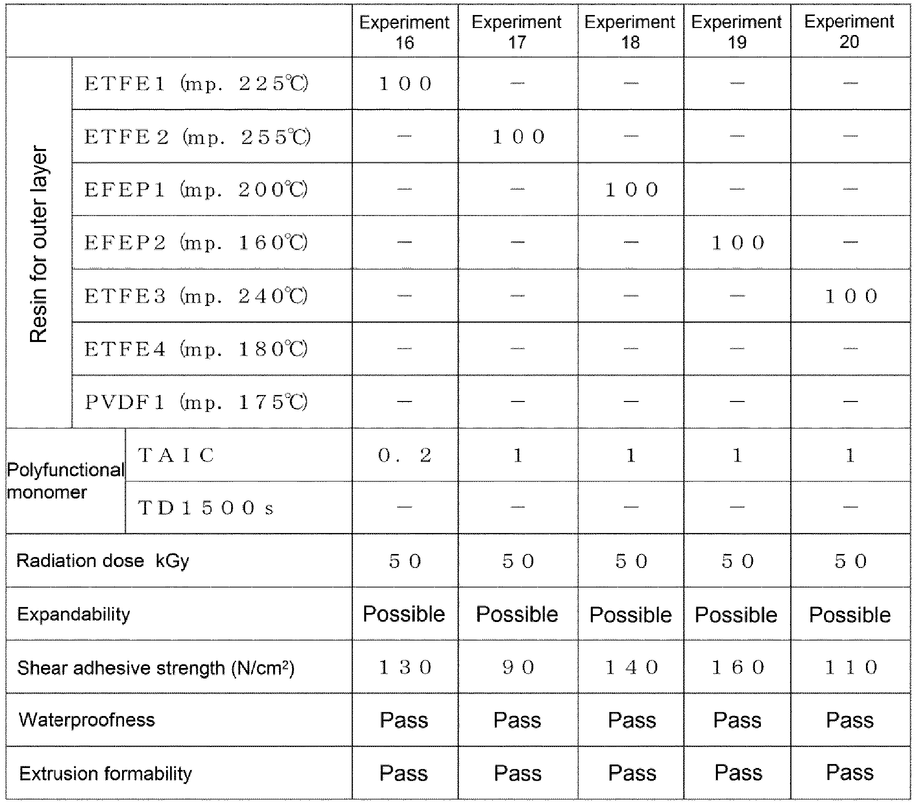

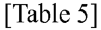

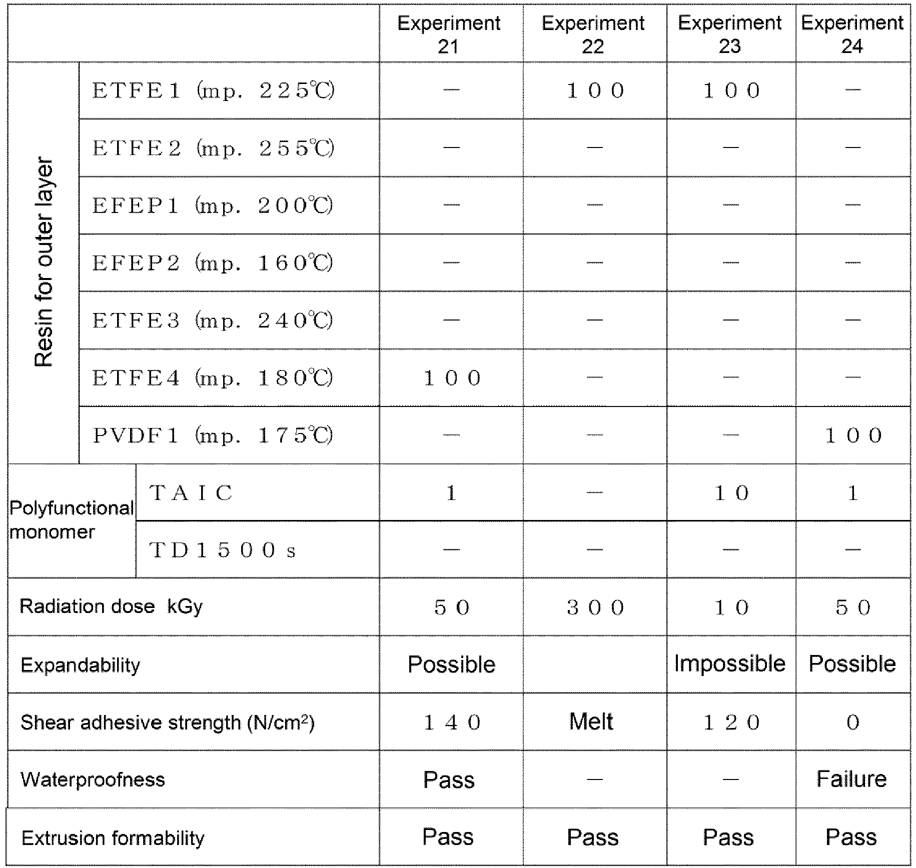

The experimental results in Tables 3 to 5 show the following 6) to 9).
6) The cross-linked products in the experimental examples 11 to 21 composed of a resin composition containing a resin selected from the group consisting of ETFE copolymers with a melting point of 210°C or more and 260°C or less, acid-modified ETFE copolymers with a melting point of 160°C or more and 260°C or less, and acid-modified EFEPs with a melting point of 150°C or more and 210°C or less and 0.1 parts or more by mass and 8 parts or less by mass of a cross-linking aid per 100 parts by mass of the resin could be expanded to impart the heat-shrinkable property, had a shear adhesive strength of more than 50 N/cm² to the inner layer, and could adhere to the inner layer to form waterproof two-layer tubes.
7) The experimental example 22 including the outer layer formed of a resin composition containing no polyfunctional monomer (cross-linking aid) melted when heated to 250°C in the measurement of shear adhesive strength and had low heat resistance.
8) The experimental example 23 including the outer layer formed of a resin composition containing 10 parts by mass of a polyfunctional monomer (cross-linking aid) per 100 parts by mass of resin was too hard to expand to impart the heat-shrinkable property.
9) The experimental example 24, in which the two-layer tube was produced by forming the outer layer using PVDF as a resin, was not practically waterproof.

### (4) Evaluation of Flame Resistance and Transparency

### (Preparation of Samples for Evaluation)

A composition containing a resin for the outer layer and TAIC (manufactured by Nippon Kasei Chemical Co., Ltd., a cross-linking aid, a polyfunctional monomer) listed in Tables 6 and 7 was melt-blended in a twin-screw mixer to prepare a resin composition for the outer layer. The resin composition for the outer layer and a resin for the inner layer listed in Tables 6 and 7 were melt-extruded with a known melt extruder to form a tubular two-layer extrudate including the outer layer 2.2 mm in inner diameter and 0.7 mm in thickness and the inner layer (adhesive layer) 0.8 mm in inner diameter and 0.7 mm in thickness.

### (Evaluation of Flame Resistance: VW-1 Vertical Flame Test)

Each tubular two-layer extrudate (samples for evaluation of flame resistance) prepared in (Preparation of Samples for Evaluation) was subjected to the VW-1 vertical flame test described in UL 224. More specifically, a sample for evaluation of flame resistance was vertically held and was exposed to burner flame at an angle of 20 degrees, and 15-second exposure and 15-second rest were repeated 5 times to determine the degree of combustion of the sample. The test was performed 5 times per sample. The results are listed in "VW-1 vertical flame test" in Tables 6 and 7. A sample was rated as pass when in all the five tests the sample was extinguished within 60 seconds, absorbent cotton placed under the sample was not burnt by falling flaming debris, and 25% or more of kraft paper placed over the sample was not burnt.

### (Evaluation of Transparency: Measurement of Transmittance)

A two-layer extrudate prepared in (Preparation of Samples for Evaluation) was cut open in the longitudinal direction to prepare a sheet 1.4 mm in thickness (outer layer: 0.7 mm, inner layer: 0.7 mm). The outer layer of the sheet was irradiated with ionizing radiation at a dose listed in Tables 6 and 7, thus producing a sample for evaluation of transparency. The light transmittance of the sample for evaluation of transparency was measured at a wavelength of 550 nm with an ultraviolet-visible spectrophotometer UV-2450 manufactured by Shimadzu Corporation. The results are listed in "Transmittance (%)" in Tables 6 and 7.

In each sample for evaluation of transparency, a transmittance of 50% or more corresponds to transparency at which the interior is visible, and is a suitable level for practical use (in applications that require transparency). A transmittance of 60% or more is more preferred, and 80% or more is still more preferred.

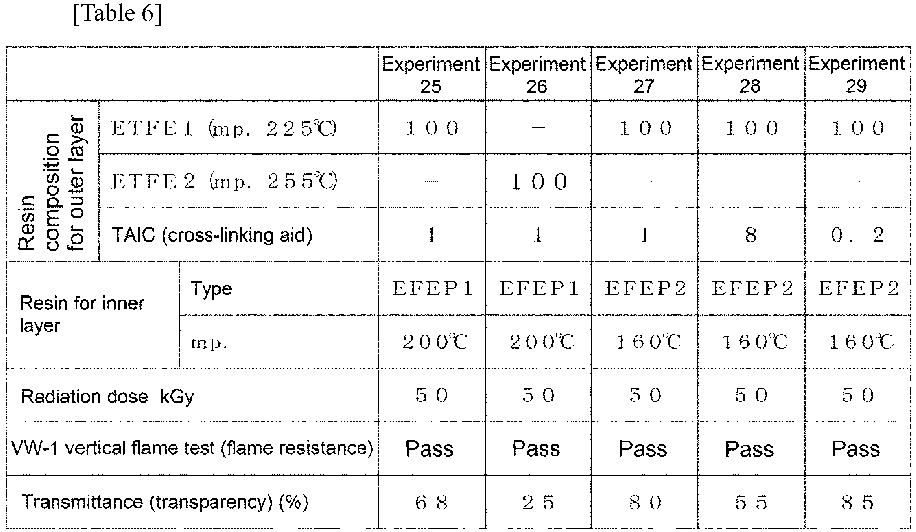

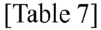

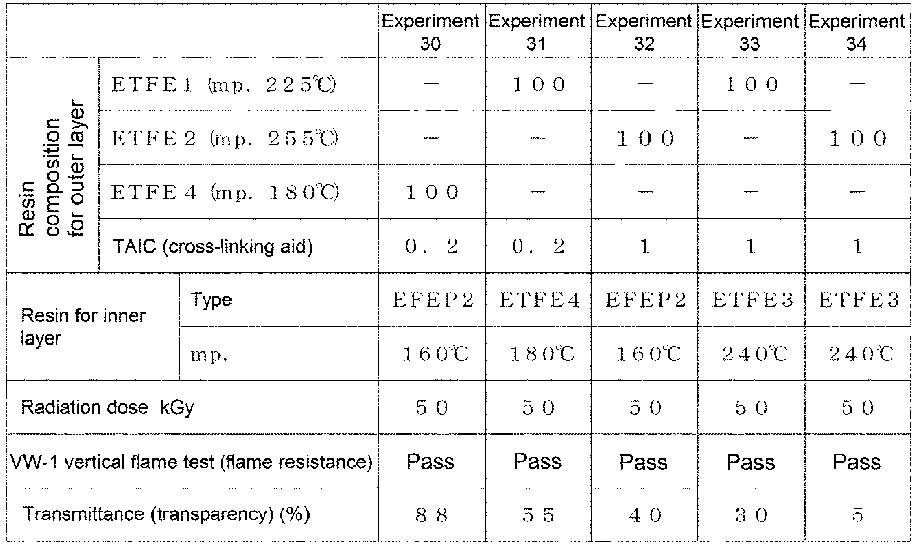

The experimental results in Tables 6 and 7 show that the experiments 25, 27, 28, 29, 30, and 31, in which the resin for the outer layer was ETFE1 with a melting point of 230°C or less (mp: 225°C: ETFE) or ETFE4 with a melting point of 230°C or less (mp: 180°C: acid-modified ETFE) and the resin for the inner layer was EFEP1 (mp: 200°C) or EFEP2 (mp: 160°C), which is EFEP with a melting point of 230°C or less, or ETFE4 (mp: 180°C), which is acid-modified ETFE with a melting point of 230°C or less, had high flame resistance that passed the VW-1 vertical flame test and had high transparency with a transmittance of more than 50%. The results of the experiments 28, 29, 30, and 31 show that the addition of 0.2 parts by mass to 8 parts by mass of the cross-linking aid to 100 parts by mass of the resin for the outer layer in the resin composition for the outer layer results in high flame resistance and transparency.

The experiments 26 and 32, in which ETFE2 with a melting point of more than 230°C (mp: 255°C) was used as the resin for the outer layer, had low transparency with a transmittance of less than 50%, though EFEP1 (mp: 200°C) or EFEP2 (mp: 160°C) with a melting point of 230°C or less was used as the resin for the inner layer.

The experiment 33, in which ETFE3 with a melting point of more than 230°C (mp: 240°C) was used as the resin for the inner layer, also had low transparency with a transmittance of less than 50%, though ETFE1 with a melting point of 230°C or less (mp: 225°C) was used as the resin for the outer layer.

The experiment 34, in which the resin for the outer layer and the resin for the inner layer were ETFE2 (mp: 255°C) and ETFE3 (mp: 240°C) with a melting point of more than 230°C, had a transmittance of 5% and could not be used in applications that require transparency.

These results show that a resin with a melting point of 230°C or less should be selected as a resin for the outer layer and a resin for the inner layer to produce a heat-resistant two-layer heat-shrinkable tube that has high flame resistance satisfying the VW-1 vertical flame test and has high transparency with a transmittance of more than 50%.

A comparison of the experiment 25 and the experiment 27 shows that a resin with a lower melting point is preferably used as a resin for the inner layer to achieve more preferred transmittance. A comparison of the experiments 27 to 29 shows that a smaller amount of cross-linking aid is more preferred.

### Reference Signs List

1 OUTER LAYER
2 INNER LAYER

## Claims

1. A heat-resistant two-layer heat-shrinkable tube comprising an outer layer and an inner layer in contact with an inner circumferential surface of the outer layer, wherein
the outer layer consists of a cross-linked product of a resin composition containing a resin selected from the group consisting of tetrafluoroethylene-ethylene copolymers with a melting point of 210°C or more and 260°C or less, acid-modified tetrafluoroethylene-ethylene copolymers with a melting point of 160°C or more and 260°C or less, and acid-modified ethylene-tetrafluoroethylene-hexafluoropropylene copolymers with a melting point of 150°C or more and 210°C or less and 0.1 parts or more by mass and 8 parts or less by mass of a cross-linking aid per 100 parts by mass of the resin, the outer layer having a thermal shrinkage temperature of 250°C or more and 280°C or less, and
the inner layer consists of a hot-melt adhesive containing a resin selected from the group consisting of acid-modified tetrafluoroethylene-ethylene copolymers and acid-modified ethylene-tetrafluoroethylene-hexafluoropropylene copolymers, the hot-melt adhesive having a shear viscosity of less than 10000 Pa·s at 250°C and at a shear rate of 10 s⁻¹.

2. The heat-resistant two-layer heat-shrinkable tube according to Claim 1, wherein the cross-linking aid is triallyl isocyanurate or trimethylolpropane triacrylate.

3. The heat-resistant two-layer heat-shrinkable tube according to Claim 1 or 2, wherein the resin constituting the hot-melt adhesive has a melting point of 160°C or more and 240°C or less, and there is no sagging of the inner layer even after the tube is vertically held at 200°C for 1000 hours.

4. The heat-resistant two-layer heat-shrinkable tube according to Claim 3, wherein the resin constituting the hot-melt adhesive has a melting point of 160°C or more and 200°C or less.

5. The heat-resistant two-layer heat-shrinkable tube according to any one of Claims 1 to 4, wherein
the resin constituting the outer layer is a resin selected from the group consisting of tetrafluoroethylene-ethylene copolymers with a melting point of 230°C or less and acid-modified tetrafluoroethylene-ethylene copolymers with a melting point of 230°C or less, and
the resin constituting the inner layer is a resin selected from the group consisting of acid-modified ethylene-tetrafluoroethylene-hexafluoropropylene copolymers with a melting point of 230°C or less and acid-modified tetrafluoroethylene-ethylene copolymers with a melting point of 230°C or less.

6. A method for covering an object to be covered, comprising the steps of: covering the object to be covered with the heat-resistant two-layer heat-shrinkable tube according to any one of Claims 1 to 5; and, after this step, heating the heat-resistant two-layer heat-shrinkable tube to 250°C or more and 280°C or less for thermal shrinkage.

7. A method for covering an object to be covered, comprising:
a step 1 of melt-extruding a resin composition in a tube shape to form an outer layer, the resin composition containing a resin selected from the group consisting of tetrafluoroethylene-ethylene copolymers with a melting point of 210°C or more and 260°C or less, acid-modified tetrafluoroethylene-ethylene copolymers with a melting point of 160°C or more and 260°C or less, and acid-modified ethylene-tetrafluoroethylene-hexafluoropropylene copolymers with a melting point of 150°C or more and 210°C or less and 0.1 parts or more by mass and 8 parts or less by mass of a cross-linking aid per 100 parts by mass of the resin;
after the step 1, a step 2 of cross-linking the resin constituting the outer layer and subsequently expanding the outer layer to impart a heat-shrinkable property so as to shrink at 250°C or more and 280°C or less;
a step 3 of melt-extruding a hot-melt adhesive in a tube shape to form an inner layer, the hot-melt adhesive containing a resin selected from the group consisting of acid-modified tetrafluoroethylene-ethylene and acid-modified ethylene-tetrafluoroethylene-hexafluoropropylene copolymers, the hot-melt adhesive having a shear viscosity of less than 10000 Pa·s at 250°C and at a shear rate of 10 s⁻¹;
a step 4 of covering the object to be covered with the inner layer formed in the step 3;
a step 5 of covering the object to be covered covered with the inner layer with the outer layer formed in the step 2; and
a step 6 of heating the object to be covered covered with the outer layer at 250°C or more and 280°C or less to thermally shrink the outer layer.

8. The method for covering an object to be covered according to Claim 7, wherein the cross-linking in the step 2 is performed by ionizing radiation.

9. The method for covering an object to be covered according to Claim 8, wherein the radiation dose ranges from 10 to 300 kGy.

## Patentansprüche

1. Wärmebeständiger zweischichtiger Wärmeschrumpfschlauch, der eine äußere Schicht und eine innere Schicht umfasst, die in Kontakt mit einer Innenumfangsfläche der äußeren Schicht ist, wobei die äußere Schicht aus einem vernetzten Produkt einer Kunststoff-Zusammensetzung besteht, die einen Kunststoff enthält, der aus der Gruppe ausgewählt wird, die aus Tetrafluorethylen-Ethylen-Copolymeren mit einem Schmelzpunkt von 210 °C oder darüber und 260 °C oder darunter, säuremodifizierten Tetrafluorethylen-Ethylen-Copolymeren mit einem Schmelzpunkt von 160 °C oder darüber und 260 °C oder darunter, sowie säuremodifizierten Ethylen-Tetrafluorethylen-Hexafluorpropylen-Copolymeren mit einem Schmelzpunkt von 150 °C oder darüber und 210 °C oder darunter und 0,1 Massenteilen oder mehr und 8 Massenteilen oder weniger eines Vernetzers pro 100 Massenteile des Kunststoffs besteht, wobei die äußere Schicht eine Wärmeschrumpf-Temperatur von 250 °C oder darüber und 280 °C oder darunter hat, und
die innere Schicht aus einem Schmelzklebstoff besteht, der einen Kunststoff enthält, der aus der Gruppe ausgewählt wird, die aus säuremodifizierten Tetrafluorethylen-Ethylen-Copolymeren und säuremodifizierten Ethylen-Tetrafluorethylen-Hexafluorpropylen-Copolymeren besteht, wobei der Schmelzklebstoff eine Scherviskosität von weniger als 10.000 Pa-s bei 250 °C und bei einer Schergeschwindigkeit von 10 s⁻¹ hat.

2. Wärmebeständiger zweischichtiger Wärmeschrumpfschlauch nach Anspruch 1, wobei der Vernetzer Triallylisocyanurat oder Trimethylolpropantriacrylat ist.

3. Wärmebeständiger zweischichtiger Wärmeschrumpfschlauch nach Anspruch 1 oder 2, wobei das den Schmelzklebstoff bildende Harz einen Schmelzpunkt von 160 °C oder darüber und 240 °C oder darunter hat, und es selbst nach vertikalem Halten des Schlauchs über 1.000 Stunden bei 200 °C zu keinem Durchhängen der inneren Schicht kommt.

4. Wärmebeständiger zweischichtiger Wärmeschrumpfschlauch nach Anspruch 3, wobei das den Schmelzklebstoff bildende Harz einen Schmelzpunkt von 160 °C oder darüber und 200 °C oder darunter hat.

5. Wärmebeständiger zweischichtiger Wärmeschrumpfschlauch nach einem der Ansprüche 1 bis 4, wobei
der die äußere Schicht bildende Kunststoff ein Kunststoff ist, der aus der Gruppe ausgewählt wird, die aus Tetrafluorethylen-Ethylen-Copolymeren mit einem Schmelzpunkt von 230 °C oder darunter und säuremodifizierten Tetrafluorethylen-Ethylen-Copolymeren mit einem Schmelzpunkt von 230 °C oder darunter besteht, und
der die innere Schicht bildende Kunststoff ein Kunststoff ist, der aus der Gruppe ausgewählt wird, die aus Tetrafluorethylen-Ethylen-Copolymeren mit einem Schmelzpunkt von 230 °C oder darunter und säuremodifizierten Tetrafluorethylen-Ethylen-Copolymeren mit einem Schmelzpunkt von 230 °C oder darunter besteht.

6. Verfahren zum Abdecken eines abzudeckenden Gegenstandes, das die folgenden Schritte umfasst:
Abdecken des abzudeckenden Gegenstandes mit dem wärmebeständigen zweischichtigen Wärmeschrumpfschlauch nach einem der Ansprüche 1 bis 5; und
nach diesem Schritt Erhitzen des wärmebeständigen zweischichtigen Wärmeschrumpfschlauchs auf 250 °C oder darüber und 280 °C oder darunter zum Wärmeschrumpfen.

7. Verfahren zum Abdecken eines abzudeckenden Gegenstandes, das umfasst:
einen Schritt 1 zum Schmelzextrudieren einer Kunststoff-Zusammensetzung in einer Schlauchform zum Ausbilden einer äußeren Schicht, wobei die Kunststoff-Zusammensetzung einen Kunststoff enthält, der aus der Gruppe ausgewählt wird, die aus Tetrafluorethylen-Ethylen-Copolymeren mit einem Schmelzpunkt von 210 °C oder darüber und 260 °C oder darunter, säuremodifizierten Tetrafluorethylen-Ethylen-Copolymeren mit einem Schmelzpunkt von 160 °C oder darüber und 260 °C oder darunter, sowie säuremodifizierten Ethylen-Tetrafluorethylen-Hexafluorpropylen-Copolymeren mit einem Schmelzpunkt von 150 °C oder darüber und 210 °C oder darunter und 0,1 Massenteilen oder mehr und 8 Massenteilen oder weniger eines Vernetzers pro 100 Massenteile des Kunststoffs besteht;
nach dem Schritt 1 einen Schritt 2 zum Vernetzen des die äußere Schicht bildenden Kunststoffs und zum anschließenden Expandieren der äußeren Schicht, um ihr ein Wärmeschrumpf-Vermögen zu verleihen, so dass sie bei 250 °C oder darüber und 280 °C oder darunter schrumpft;
einen Schritt 3 zum Schmelzextrudieren eines Schmelzklebstoffs in einer Schlauchform, um eine innere Schicht auszubilden, wobei der Schmelzklebstoff einen Kunststoff enthält, der aus der Gruppe ausgewählt wird, die aus säuremodifizierten Tetrafluorethylen-Ethylen-Copolymeren und säuremodifizierten Ethylen-Tetrafluorethylen-Hexafluorpropylen-Copolymeren besteht, wobei der Schmelzklebstoff eine Scherviskosität von weniger als 10000 Pa-s bei 250 °C und bei einer Schergeschwindigkeit von 10 s⁻¹ hat;
einen Schritt 4 des Abdeckens des abzudeckenden Objektes mit der in dem Schritt 3 ausgebildeten inneren Schicht;
einen Schritt 5 des Abdeckens des abzudeckenden, mit der inneren Schicht abgedeckten Objektes mit der in Schritt 2 ausgebildeten äußeren Schicht; sowie
einen Schritt 6 des Erhitzens des abzudeckenden, mit der äußeren Schicht abgedeckten Objektes auf 250 °C oder darüber und 280 °C oder darunter zum Wärmeschrumpfen der äußeren Schicht.

8. Verfahren zum Abdecken eines abzudeckenden Objektes nach Anspruch 7, wobei die Vernetzung in dem Schritt 2 mittels ionisierender Strahlung durchgeführt wird.

9. Verfahren zum Abdecken eines abzudeckenden Objektes nach Anspruch 8, wobei die Strahlendosis von 10 bis 300 kGy reicht.

## Revendications

1. Tube thermorétractable à deux couches résistant à la chaleur comprenant une couche externe et une couche interne en contact avec une surface circonférentielle interne de la couche externe, dans lequel
la couche externe consiste en un produit réticulé d'une composition de résine contenant une résine choisie dans le groupe consistant en copolymères de tétrafluoroéthylène-éthylène avec un point de fusion de 210°C ou supérieur et 260°C ou inférieur, copolymères de tétrafluoroéthylène-éthylène modifiés par un acide avec un point de fusion de 160°C ou supérieur et 260°C ou inférieur, et copolymères d'éthylène-tétrafluoroéthylène-hexafluoropropylène modifiés par un acide avec un point de fusion de 150°C ou supérieur et 210°C ou inférieur et 0,1 partie ou supérieur en masse et 8 parties ou inférieur en masse d'un auxiliaire de réticulation pour 100 parties en masse de la résine, la couche externe ayant une température de retrait thermique de 250°C ou supérieure et 280°C ou inférieure, et
la couche interne consiste en un adhésif thermofusible contenant une résine choisie dans le groupe consistant en copolymères de tétrafluoroéthylène-éthylène modifiés par un acide et copolymères d'éthylène-tétrafluoroéthylène-hexafluoropropylène modifiés par un acide, l'adhésif thermofusible ayant une viscosité de cisaillement inférieure à 10 000 Pa.s à 250°C et un taux de cisaillement de 10 s⁻¹.

2. Tube thermorétractable à deux couches résistant à la chaleur selon la revendication 1, dans lequel l'auxiliaire de réticulation est l'isocyanurate de triallyle ou le triacrylate de triméthylolpropane.

3. Tube thermorétractable à deux couches résistant à la chaleur selon la revendication 1 ou 2, dans lequel la résine constituant l'adhésif thermofusible présente un point de fusion de 160°C ou supérieur et 240°C ou inférieur, et il n'y a pas d'affaissement de la couche interne même après que le tube est verticalement maintenu à 200°C pendant 1 000 heures.

4. Tube thermorétractable à deux couches résistant à la chaleur selon la revendication 3, dans lequel la résine constituant l'adhésif thermofusible présente un point de fusion de 160°C ou supérieur et 200°C ou inférieur.

5. Tube thermorétractable à deux couches résistant à la chaleur selon l'une quelconque des revendications 1 à 4, dans lequel
la résine constituant la couche externe est une résine choisie dans le groupe consistant en copolymères de tétrafluoroéthylène-éthylène avec un point de fusion de 230°C ou inférieur et copolymères de tétrafluoroéthylène-éthylène modifiés par un acide avec un point de fusion de 230°C ou inférieur, et
la résine constituant la couche interne est une résine choisie dans le groupe consistant en copolymères d'éthylène-tétrafluoroéthylène-hexafluoropropylène modifiés par un acide avec un point de fusion de 230°C ou inférieur et copolymères de tétrafluoroéthylène-éthylène modifiés par un acide avec un point de fusion de 230°C ou inférieur.

6. Procédé pour la couverture d'un objet à couvrir, comprenant les étapes de : couverture de l'objet à couvrir avec le tube thermorétractable à deux couches résistant à la chaleur selon l'une quelconque des revendications 1 à 5 ; et, après cette étape, chauffage du tube thermorétractable à deux couches résistant à la chaleur à 250°C ou supérieur et 280°C ou inférieur pour un retrait thermique.

7. Procédé pour la couverture d'un objet à couvrir, comprenant :
une étape 1 d'extrusion à l'état de fusion d'une composition de résine dans une forme de tube pour former une couche externe, la composition de résine contenant une résine choisie dans le groupe consistant en copolymères de tétrafluoroéthylène-éthylène avec un point de fusion de 210°C ou supérieur et 260°C ou inférieur, copolymères de tétrafluoroéthylène-éthylène modifiés par un acide avec un point de fusion de 160°C ou supérieur et 260°C ou inférieur, et copolymères d'éthylène-tétrafluoroéthylène-hexafluoropropylène modifiés par un acide avec un point de fusion de 150°C ou supérieur et 210°C ou inférieur et 0,1 partie ou supérieur en masse et 8 parties ou inférieur en masse d'un auxiliaire de réticulation pour 100 parties en masse de la résine ;
après l'étape 1, une étape 2 de réticulation de la résine constituant la couche externe et d'expansion subséquente de la couche externe pour communiquer une propriété thermorétractable afin de rétracter à 250°C ou supérieure et 280°C ou inférieure ;
une étape 3 d'extrusion à l'état de fusion d'un adhésif thermofusible dans une forme de tube pour former une couche interne, l'adhésif thermofusible contenant une résine choisie dans le groupe consistant en copolymères de tétrafluoroéthylène-éthylène modifiés par un acide et éthylène-tétrafluoroéthylène-hexafluoropropylène modifiés par un acide, l'adhésif thermofusible ayant une viscosité de cisaillement inférieure à 10 000 Pa.s à 250°C et un taux de cisaillement de 10 s⁻¹ ;
une étape 4 de couverture de l'objet à couvrir avec la couche interne formée dans l'étape 3 ;
une étape 5 de couverture de l'objet à couvrir couvert avec la couche interne avec la couche externe formée dans l'étape 2 ; et
une étape 6 de chauffage de l'objet à couvrir couvert avec la couche externe à 250°C ou supérieure et 280°C ou inférieure pour rétracter thermiquement la couche externe.

8. Procédé pour la couverture d'un objet à couvrir selon la revendication 7, dans lequel la réticulation dans l'étape 2 est réalisée par rayonnement ionisant.

9. Procédé pour la couverture d'un objet à couvrir selon la revendication 8, dans lequel la dose de rayonnement est de 10 à 300 kGy.
